# EUROPÄISCHE PATENTANMELDUNG

(11) **EP 0 742 036 A2**
(43) Veröffentlichungstag der Anmeldung: **13.11.1996**
(21) Anmeldenummer: 96106392.2
(22) Anmeldetag: 24.04.1996
(51) Int. Cl.: B01D 17/025, B01D 17/032, E03F 5/16

(54) **Leichtflüssigkeitsabscheider**

(30) Priorität: 12.05.1995 DE 19517432
(71) Anmelder: Ihne, Heinz, 57234 Wilnsdorf (DE)
(72) Erfinder: Ihne, Heinz, 57234 Wilnsdorf (DE)
(74) Vertreter: Selting, Günther, Dipl.-Ing.

(57) **Zusammenfassung**

Der Leichtflüssigkeitsabscheider weist eine Abscheidekammer (15) auf, von der ein Hauptströmungsweg (16) und ein intermittierend anspringender Nebenströmungsweg (17) zu einem Schwerflüssigkeitsablauf (18) führen. Der Hauptströmungsweg (16) enthält eine Auslaufschwelle (27), deren Oberkante (28) die Mindestpegelhöhe in dem Behälter (10) bestimmt. Der Nebenströmungsweg (17) enthält eine Überlaufkammer (35), die mit der Abscheidekammer (15) durch einen Leichtflüssigkeitseinlaß (33) verbunden ist. Von der Überlaufkammer (35) führt ein Leichtflüssigkeitsablauf (38), der höher liegt als der Leichtflüssigkeitseinlaß (33), in einen Leichtflüssigkeitstank (19). Ferner führt von der Überlaufkammer (35) ein Schwerflüssigkeitsdurchlaß (43) zum Schwerflüssigkeitsablauf (18). Erfindungsgemäß liegt der Leichtflüssigkeitseinlaß (33) höher als die tiefste Stelle der Auslaufschwelle (27). Dadurch wird erreicht, daß bei Kleinstmengenanfall die Schwerflüssigkeit durch den Hauptströmungsweg (16) fließt.

## Beschreibung

Die Erfindung betrifft einen Leichtflüssigkeitsabscheider zum Abscheiden von Leichtflüssigkeit aus einem Gemisch aus Leicht- und Schwerflüssigkeit.

Ein Leichtflüssigkeitsabscheider, von dem der Oberbegriff des Patentanspruchs 1 ausgeht, ist bekannt aus WO 90/14874. Dieser Leichtflüssigkeitsabscheider weist einen Behälter auf, in den das Flüssigkeitsgemisch einläuft. Der Behälter enthält eine Abscheidekammer, von der ein Hauptströmungweg und ein Nebenströmungsweg jeweils zu einem Schwerflüssigkeitsablauf führen. Der Hauptströmungsweg führt abwechselnd unter Tauchwänden hindurch und über Schwellen hinweg. Die letzte dieser Schwellen bildet eine von der Schwerflüssigkeit überströmbare Auslaufschwelle, die in eine Ablaufkammer führt. Von dieser Ablaufkammer geht der Schwerflüssigkeitsablauf ab. Der Nebenströmungsweg dient dazu, aus der Abscheidekammer das obenschwimmende Gemisch aus Leicht- und Schwerflüssigkeit abzuführen und aus diesem Gemisch die Leichtflüssigkeit zu entfernen und in einen Leichtflüssigkeitstank abzuleiten. Der Nebenströmungsweg enthält einen in der Abscheidekammer angeordneten Leichtflüssigkeitseinlaß, von dem ein Tauchrohr in eine Überlaufkammer hineinführt, welche allseitig geschlossen ist. Von der Überlaufkammer führt ein Schwerflüssigkeitsdurchlaß in Form eines weiteren Tauchrohrs, in dem die Schwerflüssigkeit aufsteigt, zu der Ablaufkammer bzw. zu dem Schwerflüssigkeitsablauf. Der Schwerflüssigkeitsdurchlaß hat einen engen Querschnitt, so daß der Ablauf von Schwerflüssigkeit aus der Überlaufkammer gedrosselt wird. Wenn ein Flüssigkeitsgemisch dem Abscheider intermittierend, d.h. in Intervallen, zugeführt wird, füllt sich die Überlaufkammer nach einem Zulauf, wobei der Flüssigkeitsstand in der Überlaufkammer ansteigt. In der anschließenden Zulaufpause sinkt der Flüssigkeitsstand in der Überlaufkammer auf das Niveau des Schwerflüssigkeitsdurchlasses ab. Beim anschließenden Neuzulauf von Flüssigkeit steigt das Niveau in der Überlaufkammer wieder an, wobei Leichtflüssigkeit durch einen Leichtflüssigkeitsablauf hindurch in einen Leichtflüssigkeitstank hinein nach oben abgedrückt wird.

Bei dem bekannten Leichtflüssigkeitsabscheider liegt der Leichtflüssigkeitseinlaß in den Nebenweg tiefer als die tiefste Stelle der Auslaufschwelle, die das niedrigstmögliche Schwerflüssigkeitsniveau im Hauptströmungsweg bestimmt. Demnach ist der Leichtflüssigkeitseinlaß in der gleichen Höhe wie der Ruhewasserspiegel in der Abscheidekammer. Im Falle eines Kleinstmengenzulaufs, der nicht größer ist als die Durchflußrate durch den Schwerflüssigkeitsdurchlaß, läuft die gesamte zufließende Flüssigkeitsmenge ausschließlich über den Nebenströmungsweg, wobei eine Feinabscheidung im Hauptweg nicht erfolgen kann. Es erfolgt also überhaupt keine Leichtflüssigkeitsabscheidung in der eigentlichen Abscheidekammer und im Hauptweg, sondern nur in der im Nebenströmungsweg liegenden Überlaufkammer, in der sich eine große Menge an Leichtflüssigkeit ansammeln kann, so stark, daß sie sogar durch den Schwerflüssigkeitsdurchlaß in den Schwerflüssigkeitsablauf gelangen kann. Nur bei stärkerwerdendem Zulauf erfolgt ein erneutes Abdrücken der Leichtflüssigkeit aus der Überlaufkammer.

Der Erfindung liegt die Aufgabe zugrunde, einen Leichtflüssigkeitsabscheider mit Hauptströmungsweg und Nebenströmungsweg zu schaffen, bei dem im Falle eines Kleinstmengenzulaufs der Schwerflüssigkeitsstrom durch den Hauptströmungsweg fließt.

Die Lösung dieser Aufgabe erfolgt erfindungsgemäß mit den im Patentanspruch 1 angegebenen Merkmalen.

Bei dem erfindungsgemäßen Leichtflüssigkeitsabscheider liegt der Leichtflüssigkeitseinlaß höher als die tiefste Stelle der Auslaufschwelle des Hauptströmungsweges. Dies hat zur Folge, daß bei Kleinstmengenzulauf, beispielsweise von weniger als 0,2 l/sec., der Flüssigkeitsstand in der Abscheidekammer durch die Auslaufschwelle so hoch gehalten wird, daß der in den Nebenweg hineinführende Leichtflüssigkeitseinlaß trockenliegt. Der Schwerflüssigkeitsanteil des zufließenden Gemisches fließt bei Kleinstmengenzulauf ausschließlich über den Hauptströmungsweg, während sich in der Abscheidekammer eine immer größer werdende Leichtflüssigkeitsschicht aufbaut. Diese Leichtflüssigkeitsschicht kann aus der Abscheidekammer durch deren Leichtflüssigkeitseinlauf abfließen, wenn sie diesen erreicht. In die Überlaufkammer gelangt hierbei keine Schwerflüssigkeit. Auf diese Weise findet bei Kleinstmengenzulauf ein kontinuierliches Abscheiden von Leichtflüssigkeit in der Abscheidekammer und im Hauptströmungsweg statt.

Bei einer Zulaufrate, die etwas größer ist als der Kleinstmengenzulauf, steigt der Flüssigkeitsstand in der Abscheidekammer über den Leichtflüssigkeitseinlaß hinweg an, so daß Flüssigkeitsgemisch, und zwar in erster Linie abgeschiedene Leichtflüssigkeit, im Schwall in den Leichtflüssigkeitseinlaß hineinströmt und somit die Oberfläche in der Abscheidekammer entölt. Auf diese Weise läuft die Überlaufkammer voll, wobei die aufschwimmende Leichtflüssigkeit aus der Überlaufkammer nach oben abgedrückt wird. Anschließend kann sich die Überlaufkammer durch Ablaufen von Schwerflüssigkeit durch den Schwerflüssigkeitsdurchlaß wieder teilweise entleeren.

Auch bei stärkerem Zulauf sichert der relativ breite Leichtflüssigkeitseinlaß das Abziehen von Leichtflüssigkeit aus der Abscheidekammer. Durch den hochliegenden Leichtflüssigkeitseinlaß in den Nebenströmungsweg wird erreicht, daß der Anteil der Leichtflüssigkeit an dem Gemisch, das aus der Abscheidekammer abgezogen wird, relativ hoch ist, so daß große Mengen Leichtflüssigkeit aus der Überlaufkammer abgedrückt werden können. Der Leichtflüssigkeitsabscheider ist daher in der Lage, Leichtflüssigkeiten schwallmäßig zu speichern und diese über einen vorzugsweise höhenverstellbaren Leichtflüssigkeitsablauf in den Leichtflüssigkeitstank zu befördern.

Vorzugsweise hat die Auslaufschwelle mindestens eine Kerbe, deren Kante tiefer liegt als die Oberkante der Auslaufschwelle. Diese Kerbe erzeugt bei Kleinstmengenzulauf einen niedrigeren Flüssigkeitsstand in der Abscheidekammer, so daß der Leichtflüssigkeitseinlaß in den Nebenströmungsweg höher liegen kann wie die Oberkante der Auslaufschwelle. Die Kerbe bewirkt im Falle des Kleinstmengenzulaufs einen besonders niedrigen Schwerflüssigkeitspegel in der Abscheidekammer, wodurch die Schwall-Aufnahmekapazität des Abscheiders erhöht wird.

Der Schwerflüssigkeitsdurchlaß ist vorzugsweise ein umgekehrt U-förmiger Siphon, dessen Knie in Höhe des oberen Bereichs der Überlaufkammer liegt, jedoch tiefer als der Leichtflüssigkeitsüberlauf. Ein solcher siphonartiger Schwerflüssigkeitsdurchlaß bewirkt ein schwallartiges Abführen von Schwerflüssigkeit aus der Überlaufkammer, wenn der Pegelstand in der Überlaufkammer bis zur vollen Kniehöhe des Schwerflüssigkeitsdurchlasses angestiegen ist. Ist der Pegel dann unter den Einlaß des Schwerflüssigkeitsdurchlasses abgefallen, wird die Schwerflüssigkeitsströmung beendet und die Überlaufkammer kann sich von neuem füllen. Ein Vorteil des siphonartigen Schwerflüssigkeitsdurchlasses besteht darin, daß keine Drosselstellen vorhanden sein müssen, die verstopfen könnten. Außerdem wird eine teilweise Schwallentleerung der Überlaufkammer ermöglicht.

Weitere Merkmale und Vorteile der Erfindung ergeben sich aus der nachfolgenden Beschreibung eines Ausführungsbeispiels.

Im folgenden wird unter Bezugnahme auf die Zeichnungen ein Ausführungsbeispiel der Erfindung näher erläutert.

Es zeigen:

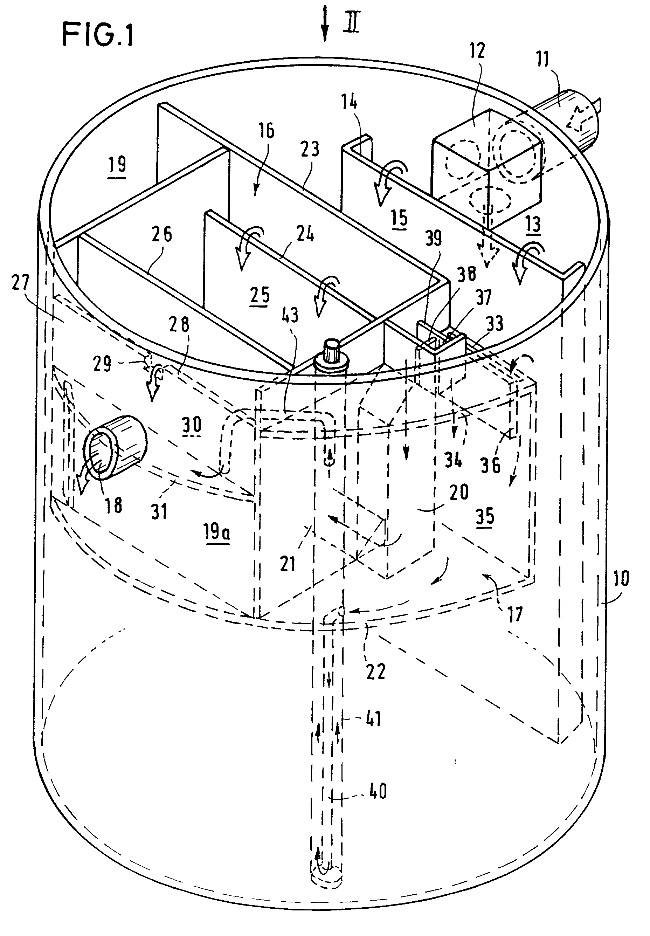

- Fig. 1: eine perspektivische Ansicht des Leichtflüssigkeitsabscheiders,

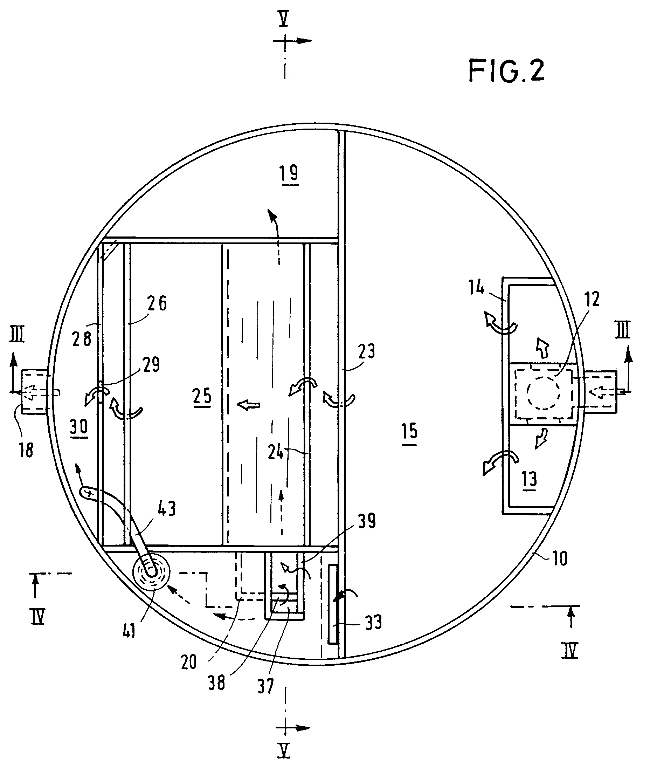

- Fig. 2: eine Draufsicht aus Richtung des Pfeiles II von Fig. 1,

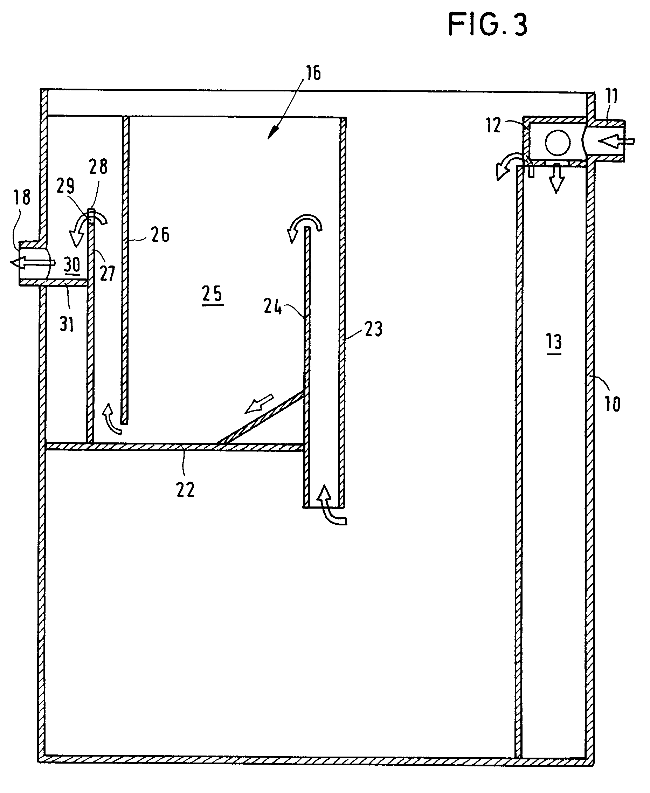

- Fig. 3: einen Querschnitt entlang der Linie III-III von Fig. 2,

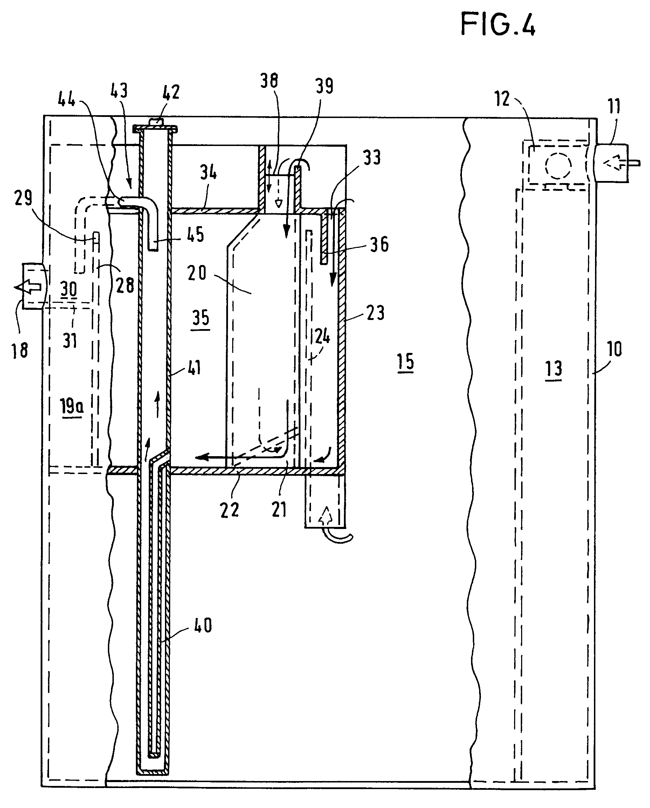

- Fig. 4: einen Schnitt entlang der Linie IV-IV von Fig. 2 und

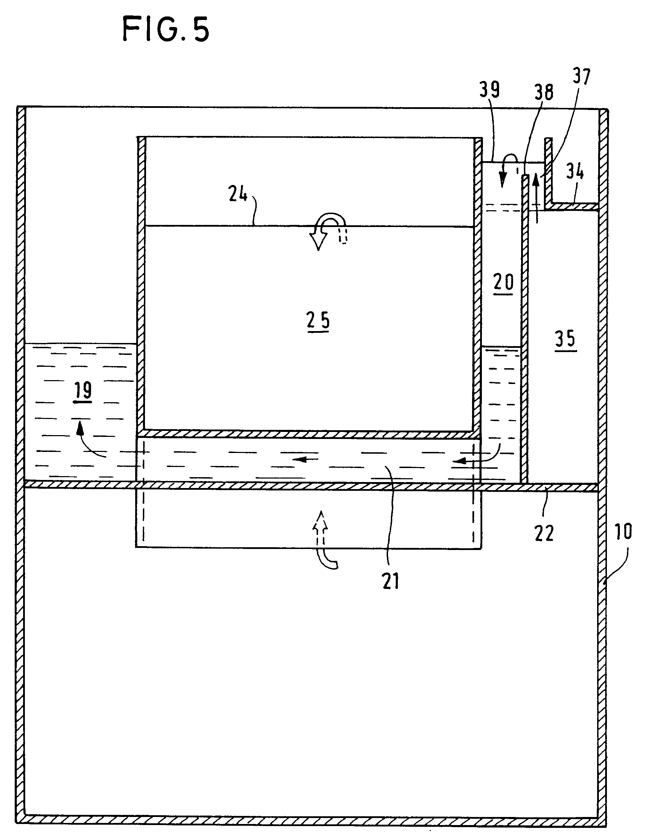

- Fig. 5: einen Schnitt entlang der Linie V-V von Fig. 2.

Der Leichtflüssigkeitsabscheider weist einen Behälter 10 auf, der hier zylindrisch ausgebildet und mit vertikaler Achse aufgestellt ist. In den Behälter 10 führt seitlich ein Zulauf 11 hinein, aus dem das Gemisch aus Schwerflüssigkeit und Leichtflüssigkeit in den Behälter 10 strömt. An den Zulauf 11 ist ein Ventil 12 angeschlossen, das bei Anwachsen des Pegelstandes über einen Grenzwert den Zulauf sperrt. Von dem Ventil 12 fließt das Gemisch zunächst in eine Absetzkammer 13, in der sich Feststoffe (Schlamm) absetzen können. Wenn die Absetzkammer 13 voll ist, strömt das Gemisch über die Oberkante 14 der Ablaufkammer in die Abscheidekammer 15. Von der Abscheidekammer 15, die sich über die gesamte Höhe des Behälters erstreckt, führen ein Hauptströmungsweg 16 und ein Nebenströmungsweg 17 zu dem Schwerflüssigkeitsablauf 18, der aus der Seitenwand des Behälters 10 als Rohr herausführt. Die Leichtflüssigkeit verbleibt im Behälter 10, und zwar in dem Leichtflüssigkeitstank 19, in den sie durch einen senkrechten Schacht 20 und einen daran anschließenden horizontalen Kanal 21 gelangt.

Der Hauptströmungsweg 16 und der Nebenströmungsweg 17 verlaufen durch einen Einsatz hindurch, der in der oberen Behälterhälfte vorgesehen ist und der unten durch eine Bodenwand 22 begrenzt ist.

Der Hauptströmungsweg 16 führt zunächst unter einer vorderen Tauchwand 23 hindurch und dann über eine Einlaufschwelle 24 hinweg in eine Koaleszenzkammer 25. Die Koaleszenzkammer 25 ist von einer Tauchwand 26 begrenzt, die von der Schwerflüssigkeit unterströmt wird. Hinter der Tauchwand 26 befindet sich die Auslaufschwelle 27, die bis zur Bodenwand 22 reicht und deren Oberkante 28 von der Schwerflüssigkeit überströmt wird. Die Auslaufschwelle 27 enthält eine Kerbe 29 zur Ermöglichung einer Durchflußmöglichkeit unterhalb der Oberkante 28 in die angrenzende Ablaufkammer 30, die durch eine Bodenwand 31 begrenzt ist, welche auf derselben Höhe liegt wie die Unterkante des Schwerflüssigkeitsablaufs 18. Die Schwerflüssigkeit, die die Oberkante 28 überströmt oder die Kerbe 29 durchströmt, läuft also durch den Schwerflüssigkeitsablauf 18 aus dem Behälter 10 heraus.

Die Oberkante der Einlaufschwelle 24 liegt tiefer als die Unterkante der Kerbe 29. Daher wird der tiefstmögliche Schwerflüssigkeitsstand in dem Hauptströmungsweg 16 und in der Abscheidekammer 15 durch die Höhe der Unterkante der Kerbe 29 bestimmt. Wasser, das sich unterhalb der Kerbe 29 befindet, kann aus dem Behälter nicht ablaufen.

Der Nebenströmungsweg 17 verläuft seitlich neben dem Hauptströmungsweg 16. Er beginnt mit einem Leichtflüssigkeitseinlaß 33, der als langgestreckter horizontaler Schlitz in der horizontalen Oberwand 24 der Überlaufkammer 35 ausgebildet ist. Der Leichtflüssigkeitseinlaß 33 ist durch eine Tauchwand 36 begrenzt, so daß die in die Überlaufkammer 35 von oben her einfließende Flüssigkeit zunächst nach unten geführt wird.

In der Überlaufkammer 35, die durch die Bodenwand 22 etwa auf halber Höhe des Behälters 10 nach unten hin begrenzt wird, sammelt sich die Schwerflüssigkeit unten, während die Leichtflüssigkeit aufschwimmt. Die Überlaufkammer 35 ist allseitig geschlossen und in ihr befindet sich der senkrechte Schacht 20, der vertikal durch die gesamte Höhe der Überlaufkammer hindurchgeht und über die Oberwand 34 hinausragt. Unmittelbar an den Schacht angrenzend ist ein Steigrohr 37 vorgesehen, das über die Oberwand 34 aufsteigt und in das aus der Überlaufkammer 35 Leichtflüssigkeit hochgedrückt werden kann. Die Oberkante der das Steigrohr 37 gegen den Schacht 20 abgrenzenden Wand bildet den Leichtflüssigkeitsablauf 38, der in den oben offenen Schacht 20 hineinführt. Oberhalb des Leichtflüssigkeitsablaufs 38 befindet sich der Leichtflüssigkeitsüberlauf 39. Der Leichtflüssigkeitsüberlauf 39 verbindet den oberen Bereich der Abscheidekammer 15 unmittelbar mit dem Innern des Schachtes 20, so daß bei einer dicken Leichtflüssigkeitsschicht in der Abscheidekammer 15 ein Teil dieser Schicht über den Leichtflüssigkeitsüberlauf 39 direkt in den Schacht 20 und von dort in den Leichtflüssigkeitstank 19 fließen kann.

Der Leichtflüssigkeitsablauf 38 liegt höher als der Leichtflüssigkeitseinlauf 33, der wiederum höher liegt als die Einlaufschwelle 24 und die Auslaufschwelle 27. Der Leichtflüssigkeitsüberlauf 39, der die Abscheidekammer 15 mit dem Schacht 20 verbindet, liegt noch höher als der Leichtflüssigkeitsablauf 38, der die Überlaufkammer 35 über das Steigrohr 37 mit dem Schacht 20 verbindet. Der Leichtflüssigkeitsablauf 38 und der Leichtflüssigkeitsüberlauf 39 sind höhenverstellbar, um ihre Höhe den jeweiligen Erfordernissen anpassen zu können.

Von dem unteren Bereich der Überlaufkammer 35 erstreckt sich ein Kanal 40 in Form eines Rohres in den unteren Bereich des Behälters 10, der unterhalb der Bodenwand 22 liegt. Der Kanal 40 verläuft im Innern eines Tauchrohrs 41, das am untere Ende geschlossen ist und sich im wesentlichen über die gesamte Höhe das Behälters 10 erstreckt. Das Tauchrohr 41 ist an seinem oberen Ende mit einer Belüftungsöffnung 42 versehen, die auch eine Reinigung des Tauchrohrs erlaubt. Aus dem unteren Bereich der Überlaufkammer 35 gelangt Schwerflüssigkeit zunächst in den Kanal 40 und dann in das Tauchrohr 41. Das Innere des Tauchrohrs 41 ist mit einem Schwerflüssigkeitsdurchlaß 43 verbunden, der als umgekehrt U-förmiger Siphon ausgebildet ist. Der Schwerflüssigkeitsdurchlaß 43 ist ein U-förmiges Rohr, dessen einer Schenkel vertikal im oberen Bereich des Tauchrohrs 41 verläuft und dort offen ist und dessen anderer Schenkel in die Ablaufkammer 30 hineinragt. Die obere Querstrecke des Schwerflüssigkeitsdurchlasses 43 bildet das Knie des Siphons. Dieses Knie 44 liegt über der Oberwand 34, jedoch tiefer als der Leichtflüssigkeitsüberlauf 38. Nur dann, wenn der Flüssigkeitsstand im Tauchrohr 41 eine solche Höhe erreicht hat, daß das Knie 44 des Schwerflüssigkeitsdurchlasses 43 gefüllt ist, läuft Wasser durch den Schwerflüssigkeitsdurchlaß 43 in die Ablaufkammer 30. Diese Wasserströmung läuft so lange, bis der einlaufseitige Schenkel 45 des Siphons Luft ansaugt, also der Flüssigkeitsstand im Tauchrohr 41 bis unter den Schenkel 45 abgesunken ist. Wenn dies der Fall ist, ist auch der Flüssigkeitsstand in der Überlaufkammer 35 bis etwa zur gleichen Höhe abgesunken. Auf diese Weise wird die Überlaufkammer 35 in einem Zuge teilweise entleert, nachdem sie vollgelaufen ist. Durch den tief reichenden Kanal 40 und das Tauchrohr 41 wird sichergestellt, daß in keinem Fall Leichtflüssigkeit in das Tauchrohr 41 gelangen kann. Selbst wenn die Überlaufkammer 35 über ihre gesamte Höhe Leichtflüssigkeit enthält, kann Leichtflüssigkeit nicht außerhalb des Kanals 40 in das Tauchrohr 41 gelangen.

Unterhalb der Ablaufkammer 30 befindet sich eine Hilfskammer 19a, die mit dem Leichtflüssigkeitstank 19 in Verbindung steht und dessen Aufnahmekapazität erhöht.

Der Leichtflüssigkeitsabscheider arbeitet wie folgt:

Das Flüssigkeitsgemisch fließt über den Zulauf 11 in die Vorabscheidekammer 13 und läuft von dort in die Abscheidekammer 15 über. In der Abscheidekammer 15 stellt sich ein Flüssigkeitsstand ein, der etwa auf gleicher Höhe liegt wie die Unterkante der Kerbe 29. Im Falle eines Kleinstmengenzulaufs fließt Schwerflüssigkeit ausschließlich über den Hauptströmungsweg 16, wobei die Leichtflüssigkeit aufschwimmend in der Abscheidekammer 15 verbleibt. Die Schwerflüssigkeit fließt durch die Kerbe 29 der Auslaufschwelle 27 ab. Sollte sich in der Abscheidekammer 15 so viel Leichtflüssigkeit angesammelt haben, daß der Leichtflüssigkeitsstand über den Leichtflüssigkeitseinlaß 33 hinausgeht, so fließt Leichtflüssigkeit in die Überlaufkammer 35 hinein.

Bei stärkerem Flüssigkeitszulauf reicht die Kerbe 29 für den Schwerflüssigkeitsablauf nicht aus. In diesem Fall strömt Schwerflüssigkeit über die Oberkante 28 der Auslaufschwelle 27. Durch den erhöhten Flüssigkeitsstand in der Abscheidekammer 15 gelangen Schwer- und Leichtflüssigkeit durch den Leichtflüssigkeitseinlaß 33 in die Überlaufkammer 35. In dieser steigt der Pegel so weit an, daß die aufschwimmende Leichtflüssigkeit über den Leichtflüssigkeitsablauf 38 in den Schacht 20 abgedrückt wird. Gleichzeitig steigt der Schwerflüssigkeitsstand im Tauchrohr 41, bis der Schwerflüssigkeitsdurchlaß 43 aktiv wird. Dann erfolgt eine Entleerung aus dem Tauchrohr 41 in die Ablaufkammer 30, bis der Flüssigkeitsstand in der Überlaufkammer 35 auf ein relativ niedriges Niveau abgesunken ist und die Überlaufkammer neue Flüssigkeit aus dem Leichtflüssigkeitseinlaß 33 aufnehmen kann.

Fließt bei einem Ölunfall sehr viel Leichtflüssigkeit in den Abscheider, dann übersteigt die Leichtflüssigkeit den Leichtflüssigkeitsüberlauf 39, wodurch Leichtflüssigkeit unmittelbar von der Abscheidekammer 15 in den Leichtflüssigkeitstank 19 gelangt.

Anstelle des siphonartigen Schwerflüssigkeitsdurchlasses 43 kann auch ein Schwerflüssigkeitsdurchlaß vorgesehen sein, der ein schwimmergesteuertes, normalerweise geschlossenes Ventil enthält, das den Schwerflüssigkeitsdurchlaß öffnet, wenn der Flüssigkeitsstand in der Überlaufkammer 35 einen vorbestimmten Maximalpegel erreicht hat und ihn dann für eine vorgegebene Zeit oder bis zum Erreichen eines Minimalpegels offenhält. Auch mit einem solchen Ventil wird erreicht, daß der Pegelstand in der Überlaufkammer 35 sich von Zeit zu Zeit verringert, damit die Überlaufkammer neue Leichtflüssigkeit durch den Leichtflüssigkeitseinlaß 33 aufnehmen kann, und danach der Pegelstand erhöht wird, um Leichtflüssigkeit durch den Leichtflüssigkeitsablauf 38 in den Leichtflüssigkeitstank 19 abzudrücken.

Der Leichtflüssigkeitseinlaß 33, der bei dem beschriebenen Ausführungsbeispiel in fester Höhe angeordnet ist, kann auch höhenveränderbar ausgebildet sein. So kann es zweckmäßig sein, den Leichtflüssigkeitseinlaß 33 als Teleskoprohr auszubilden, an dem ein Schwimmkörper befestigt ist, welcher auf dem Schwerflüssigkeitsniveau oder dem darüber befindlichen Leichtflüssigkeitsniveau in der Abscheidekammer 15 schwimmt und den Leichtflüssigkeitseinlaß 33 mit in Abhängigkeit von dem Schwerflüssigkeitsniveau variierender Höhe einstellt.

## Patentansprüche

1. Leichtflüssigkeitsabscheider mit einer Abscheidekammer (15), von der ein Hauptströmungsweg (16) und ein Nebenströmungsweg (17) zu einem Schwerflüssigkeitsablauf (18) führen, wobei der Hauptströmungsweg (16) eine von der Schwerflüssigkeit überströmbare Auslaufschwelle (27) und eine dahinter angeordnete Ablaufkammer (30) aufweist und der Nebenströmungsweg (17) aufweist:
eine Überlaufkammer (35) mit einem mit der Abscheidekammer (15) verbundenen Leichtflüssigkeitseinlaß (33), einen Leichtflüssigkeitsablauf (38), der höher liegt als der Leichtflüssigkeitseinlaß (33) und in einen mit einem Leichtflüssigkeitstank (19) verbundenen Schacht (20) führt, und einen von der Überlaufkammer (35) zu dem Schwerflüssigkeitsablauf (18) führenden Schwerflüssigkeitsdurchlaß (43),
**dadurch gekennzeichnet,**
daß der Leichtflüssigkeitseinlaß (33) höher liegt als die tiefste Stelle der Auslaufschwelle (27).

2. Leichtflüssigkeitsabscheider nach Anspruch 1, dadurch gekennzeichnet, daß die Auslaufschwelle (27) mindestens eine Kerbe (29) aufweist, deren Kante tiefer liegt als die Oberkante (28) der Auslaufschwelle (27).

3. Leichtflüssigkeitsabscheider nach Anspruch 1 oder 2, dadurch gekennzeichnet, daß der Schwerflüssigkeitsdurchlaß (43) ein umgekehrt U-förmiger Siphon ist, dessen Knie (44) in Höhe des oberen Bereichs der Überlaufkammer (35) liegt, jedoch tiefer als der Leichtflüssigkeitsablauf (38) und der die Überlaufkammer in Intervallen teilweise entleert.

4. Leichtflüssigkeitsabscheider nach einem der Ansprüche 1-3, dadurch gekennzeichnet, daß der Schwerflüssigkeitsdurchlaß (43) mit einem Tauchrohr (41) verbunden ist, das sich in der Überlaufkammer (35) erstreckt und diese nach unten überragt, wobei sich in dem Tauchrohr (41) ein mit der Überlaufkammer (35) verbundener Kanal (40) erstreckt, der am unteren Ende in das Tauchrohr mündet.

5. Leichtflüssigkeitsabscheider nach Anspruch 1 oder 2, dadurch gekennzeichnet, daß ein Leichtflüssigkeitsüberlauf (39) direkt von der Abscheidekammer (15) zu dem Schacht (20) vorgesehen ist, wobei der Leichtflüssigkeitsüberlauf (39) höher liegt als der Leichtflüssigkeitsablauf (38).

6. Leichtflüssigkeitsabscheider nach einem der Ansprüche 1-5, dadurch gekennzeichnet, daß im Hauptströmungsweg (16) vor der Auslaufschwelle (27) eine Einlaufschwelle (24) angeordnet ist, deren Oberkante tiefer liegt als diejenige (28) der Auslaufschwelle (27) und vorzugsweise in Höhe der Kante der Kerbe (29) der Auslaufschwelle.

7. Leichtflüssigkeitsabscheider nach Anspruch 1, dadurch gekennzeichnet, daß in dem Schwerflüssigkeitsdurchlaß (43) ein pegelgesteuertes, normalerweise geschlossenes Ventil angeordnet ist, das den Schwerflüssigkeitsdurchlaß öffnet, wenn der Flüssigkeitsstand in der Überlaufkammer (35) einen vorbestimmten Maximalpegel erreicht hat, und ihn dann für eine vorgegebene Zeit oder bis zum Erreichen eines Minimalpegels offenhält.
